# EUROPÄISCHE PATENTSCHRIFT

(11) **EP 3 727 852 B1**
(45) Veröffentlichungstag und Bekanntmachung des Hinweises auf die Patenterteilung: **26.03.2025**
(21) Anmeldenummer: 18822087.5
(22) Anmeldetag: 20.12.2018
(51) Int. Cl.: B32B 27/08, B32B 27/20, B32B 27/22, B32B 27/30, B32B 27/34, B32B 1/08

(54) **KRAFTSTOFFLEITUNG SOWIE VERFAHREN ZU DEREN HERSTELLUNG UND DEREN VERWENDUNGEN**
FUEL LINE AND METHOD FOR ITS MANUFACTURE AND ITS USES
CONDUITE DE CARBURANT AINSI QUE SON PROCÉDÉ DE FABRICATION ET SON UTILISATION

(30) Priorität: 22.12.2017 EP 17209960
(43) Veröffentlichungstag der Anmeldung: 28.10.2020
(73) Patentinhaber: EMS-CHEMIE AG, 7013 Domat/Ems (CH)
(72) Erfinder: CAVIEZEL, Heinz, 7425 Masein (CH); STÖPPELMANN, Georg, 7402 Bonaduz (CH)
(74) Vertreter: Bremi, Tobias Hans
(86) Internationale Anmeldenummer: PCT/EP2018/086281
(87) Internationale Veröffentlichungsnummer: WO 2019/122180

(56) Entgegenhaltungen:
- EP-A1- 1 162 061
- EP-A1- 1 884 356
- DE-A1- 102005 061 530
- DE-T2- 60 004 907

## Beschreibung

### TECHNISCHES GEBIET

Die vorliegende Erfindung betrifft eine Leitung, insbesondere für Kraftstoffe im Automobilbereich, aus thermoplastischem Material, ein Verfahren zur Herstellung einer derartigen Leitung und Verwendungen solcher Leitungen.

### STAND DER TECHNIK

Die Verwendung von Kraftstoffleitungen auf Basis von Schichtstrukturen aus Kunststoffen, insbesondere aus Polyamid, gehört bereits seit längerer Zeit zum Stand der Technik. Aufgrund der Anforderungen in Bezug auf Durchlässigkeit für Kraftstoffe sowie der geforderten mechanischen Eigenschaften (z.B. Schlagzähigkeit, Bruchdehnung) und der chemischen Beständigkeit nach innen und aussen bei unterschiedlichsten Temperaturen werden dabei bevorzugt Mehrschichtrohre verwendet, welche sich durch eine hohe thermische Belastbarkeit, eine hohe Längenstabilität sowie eine grosse Widerstandsfähigkeit gegenüber der darin geführten Kraftstoffe aufweisen. Relevant ist dabei u.a. ein niedriger Wert der Durchlässigkeit (Permeation), wobei dieser niedrige Wert der Durchlässigkeit nicht nur für den Kraftstoff selber, sondern auch für gegebenenfalls darin enthaltene Additive oder geringe andere Bestandteile gegeben sein muss. Weiterhin ist eine Widerstandsfähigkeit gegenüber einem Auswaschen von Komponenten oder von Bestandteilen der Mehrschichtstruktur gefordert.

Aus der US-A-2014/246111 sind Kraftstoffleitungen für den Fahrzeugbereich bekannt, welche wenigstens fünf Schichten aufweisen und Barriereschichten, Haftvermittlerschichten und weitere Funktionsschichten umfassen. Auf der Innenseite wird insbesondere eine Schicht aus Fluorpolymer vorgesehen und als Barriereschicht eine Schicht aus EVOH (Ethylen-Vinylalkohol Copolymer).

EP-A-1645412 beschreibt Leitungen für Brennstoffzellen aus thermoplastischen Materialien. Als Innenschicht wird eine Schicht aus einer Polyamidformmasse vorgeschlagen, und als daran anfolgende mögliche Schichten werden unterschiedlichste Vorschläge gemacht, unter anderem auch EVOH-Schichten. Konkrete Beispiele für Schichtstrukturen werden nicht gegeben, und um eine Verbindung zwischen einer gegebenenfalls vorhandenen EVOH-Schicht und der Polyamid-Innenschicht zu gewährleisten, wird ausdrücklich auf die Notwendigkeit eines Haftvermittlers in Form einer separaten zusätzlichen Schicht hingewiesen.

US-A-2009/269532 beschreibt eine Leitung aus wenigstens zwei Schichten, beide aus Polyamid, das Kernelement ist dabei, die Innenschicht nur mit einem organischen Stabilisator auszurüsten und ausdrücklich nicht mit einem Kupferstabilisator. Als Vorteil wird hervorgehoben, dass derartige Strukturen gegenüber Alterung, insbesondere im Kontakt mit Heissluft, gegenüber dem Stand der Technik verbessert sein sollen und widerstandsfähiger sein sollen im Kontakt mit korrosiven Flüssigkeiten. Soweit überhaupt Dreischichtstrukturen mit einer zentralen EVOH-Schicht offenbart werden, verfügen diese auf der Innenseite stets über eine organische Stabilisierung und auf der Aussenseite über eine Kupferstabilisierung.

US-A-2015/353792 beschreibt Haftvermittler-Materialien zur Anwendung beispielsweise bei Kraftstoff-Mehrschichtleitungen. Vorgeschlagen werden dabei komplexe Copolyamide des allgemeinen Aufbaus A/B/C, beispielsweise vom Typ 6/612/12, und es wird gezeigt, dass so eine Haftung zwischen zwei unterschiedlichen Polyamidschichten gewährleistet werden kann.

Die EP-A-445706 schlägt Schichtstrukturen als Kraftstoffleitungen vor, welche mindestens 3 Schichten aus mindestens 2 verschiedenen Polyamiden aufweisen. Als Vergleichsbeispiel wird eine Schichtstruktur mit einer Innenschicht aus schlagzähmodifiziertem Polyamid 6, einer Zwischenschicht aus EVOH und einer Aussenschicht aus schlagzähmodifiziertem Polyamid 6 gearbeitet und gezeigt, dass eine solche Struktur gegenüber Kälteschlag nicht genügend widerstandsfähig ist.

Aus der GB 2390658 ist unter anderem eine Kraftstoffleitung mit einer Barriereschicht aus EVOH bekannt mit einer Innenschicht aus Polyamid 6 und einer Aussenschicht aus Polyamid 612, oder auch mit Innenschicht und Aussenschicht aus Polyamid 612. Es werden Bruchdehnungen von 150 % erreicht. Bevorzugtermassen ist dabei die Innenschicht aus Polyamid 612 oder 610 ausgebildet, und grenzt unmittelbar an die Schicht aus EVOH. Spezifisch offenbart werden dabei insbesondere Strukturen, bei welchen nur drei Schichten vorhanden sind, und bei welchen die Aussenschichten ausschliesslich aus Polyamid 610, oder Polyamid 612 oder Polyamid 6 bestehen.

Aus der EP-A-1036968 sind Kraftstoffleitungen bekannt, welche wenigstens 4 Schichten aufweisen, unter anderem eine Barriereschicht aus EVOH, und, als Haftvermittlerschicht zu einer äussersten Schicht aus Polyamid 12 oder Polyamid 11, eine Schicht auf Lactamrespektive Aminosäure-Basis oder auf Basis von Polyamid 69.

Aus der EP-A-1216826 ist ein Mehrschichtverbund mit einer EVOH-Schicht als Kraftstoffleitung bekannt, wobei als Material für eine Haftvermittlerschicht zu einer Aussenschicht, insbesondere auf Basis von Polyamid 12, ein Polyamid-Polyamin Copolymer vorgeschlagen wird. Aufgrund der offenbar beobachteten schlechten Haftung von Polyamiden auf EVOH wird vorgeschlagen, eine direkt an die EVOH-Sperrschicht grenzende Schicht auf Basis von Polyamid als spezielle Mischung auszugestalten, wobei eine Vielzahl von Polyamiden sowie die Anwesenheit eines Polyamin-Polyamid-Copolymeren als notwendig erachtet wird, um überhaupt eine gute Haftung auch bei längerem Kontakt mit Kraftstoffen sicherzustellen. In den spezifischen Beispielen wird die Innenschicht aufgrund der erforderlichen Widerstandsfähigkeit gegenüber Kraftstoffen stets als Polyamid 6-Schicht ausgestaltet. Weitere Möglichkeiten von anderen Polyamiden werden zwar beschrieben, es werden aber keine Hinweise auf spezifisch bevorzugte Polyamide beispielsweise hinsichtlich einerseits einer besonders guten Haftung an der Sperrschicht und andererseits einer Widerstandsfähigkeit gegenüber spezifischen Chemikalien gemacht.

Eine weitere Kraftstoffleitung nach dem Stand der Technik findet man in der EP-A-1 452 307, hier ist ebenfalls eine Sperrschicht auf Basis von EVOH vorgesehen, und, um eine Haftung an der Sperrschicht sowie eine gute Widerstandsfähigkeit gegenüber Peroxid gewährleisten zu können, wird spezifisch vorgeschlagen, die Innenschicht nicht auf Basis eines Polyamid 6-Homopolymers auszubilden, sondern auf Basis einer Mischung von Polyamid Homopolymeren, welche einen Verträglichkeitsvermittler enthalten. Auch hier werden unterschiedliche Polyamid Homopolymere angegeben, in der Regel aber ohne spezifische Angaben darüber zu machen, welche Polyamid Homopolymere eine besonders gute Haftung an der Sperrschicht und eine Widerstandsfähigkeit gegenüber spezifischen Chemikalien aufweisen.

Weiterhin sei auf die beiden Dokumente EP-A-1 036 968 sowie EP-A-1 162 061 hingewiesen, in welchen ebenfalls thermoplastische Mehrschichtverbunde beschrieben werden, welche als Sperrschicht eine Schicht aus EVOH aufweisen. Angrenzend an diese Schicht wird in der EP-A-1 162 061 eine Schicht aus einer Formmasse auf Basis von Polyamid beschrieben, wobei eine Vielzahl von möglichen Polyamiden in allgemeiner Weise angegeben wird. Spezifisch in den Beispielen wird aber nur eine Innenschicht aus Polyamid 6 offenbart. In der EP-A-1 036 968 wird insbesondere darauf abgezielt, dass Copolyamide eine verbesserte Haftung an Sperrschichten aus EVOH aufweisen. Als Innenschichten werden dabei stets Schichten aus Mischungen aus von Polyamid und Polyolefin, oder Polyamidschichten angegeben.

EP-A-1 884 356 beschreibt einen thermoplastischen Mehrschichtverbund in Form eines extrudierten Hohlprofils, umfassend eine thermoplastische Aussenschicht und mindestens eine weitere Schicht, wobei die Aussenschicht aus einer Mischung auf Basis von wenigstens einem Polyamid (PA) und 20 bis 80 Gewichtsteilen von wenigstens einem Polyamid-Elastomeren (TPE-A) gebildet ist, und das Hohlprofil bei Extrusionsgeschwindigkeiten von über 20 m/min hergestellt wurde, so dass das hergestellte Hohlprofil eine höhere Reissdehnung von über 200% aufweist, verglichen mit einem sonst gleichen, aber bei niedrigeren Extrusionsgeschwindigkeiten hergestellten Hohlprofil. Gearbeitet werden dabei nur Strukturen, bei denen als Aussenschicht Mischungen aus Lactam basierten Polyamiden eingesetzt werden (konkret PA12 und PA 6), oder Mischungen aus PA12 mit Polyetheramid mit PA 6 Hartblöcken verwendet werden.

### DARSTELLUNG DER ERFINDUNG

Es ist entsprechend Aufgabe der vorliegenden Erfindung, einen verbesserten Mehrschichtverbund in Form eines einen Innenraum umschliessenden Hohlkörpers zur Verfügung zu stellen. Insbesondere geht es darum, eine gute Barrierewirkung bei möglichst wenig unterschiedlichen Schichten, d.h. unter Vermeidung von Haftvermittlerschichten, bereitzustellen, insbesondere mit einer sehr grossen Bruchdehnung, insbesondere mit einer Reissdehnung von grösser 300 %, d.h. ausgezeichneten mechanischen Eigenschaften, insbesondere hinsichtlich Kälteschlag und Reissdehnung, und guter Auswaschbeständigkeit.

Diese Aufgabe wird durch einen Mehrschichtverbund gemäss Anspruch 1 erfüllt.

Der vorgeschlagene Mehrschichtverbund besteht aus drei Schichten, einer an den Innenraum angrenzenden Innenschicht, einer an diese grenzenden Mittelschicht und einer an die Mittelschicht grenzenden, den Mehrschichtverbund nach aussen abschliessenden Aussenschicht. Es gibt also neben der als Barriereschicht dienenden Mittelschicht und einer Innenschicht und einer Aussenschicht keine weiteren Schichten, insbesondere keine Haftvermittlerschichten. Was es zusätzlich geben kann, ist eine weitere innerste Schicht, die dann leitfähig ausgerüstet ist. In diesem Fall grenzt die genannte Innenschicht nicht direkt an den Innenraum, sondern indirekt über diese innerste Schicht, es ist aber immer noch so, dass alle Schichten direkt aneinandergrenzen, d. h. die innerste Schicht, die direkt an den Innenraum grenzt, grenzt nach aussen direkt an die Innenschicht, die Innenschicht grenzt direkt an die Mittelschicht, und die Mittelschicht grenzt direkt an die Aussenschicht, und die Aussenschicht ist die äusserste Schicht des Mehrschichtverbundes.

Dabei ist die Innenschicht auf Basis von Polyamid 6 ausgebildet, die Mittelschicht auf Basis von EVOH, und die Aussenschicht ist auf Basis einer Mischung von Polyamid 6 und wenigstens einem weiteren Polyamid, nämlich Polyamid 612, Polyamid 614, Polyamid 616, Polyamid 618 oder einer Mischung davon, ausgebildet.

Überraschenderweise zeigt es sich, dass diese spezifische Auswahl von Materialien in der angegebenen Schichtreihenfolge die genannten Eigenschaften bereitstellen kann, ohne dass Haftvermittlerschichten erforderlich sind, und dabei die insbesondere für den Automobilbereich als Kraftstoffleitung zu bestehenden Prüfkriterien unerwartet hervorragend erreicht werden. Insbesondere kann eine Bruchdehnung gemäss ISO 527 von über 300 % erreicht werden.

Die Erfindung betrifft also einen Mehrschichtverbund in Form eines einen Innenraum umschliessenden Hohlkörpers bestehend aus drei Schichten, einer an den Innenraum angrenzenden Innenschicht, einer an diese grenzenden Mittelschicht und einer an die Mittelschicht grenzenden, den Mehrschichtverbund nach aussen abschliessenden Aussenschicht, wobei gegebenenfalls eine weitere innerste Schicht vorgesehen sein kann, die dann direkt an die Innenschicht grenzt und leitfähig ausgerüstet ist.

Die Innenschicht ist auf Basis von Polyamid 6 ausgebildet, die Mittelschicht auf Basis von EVOH und die Aussenschicht auf Basis einer Mischung von (A) Polyamid 6 und (B) wenigstens einem weiteren anderen Polyamid, ausgewählt aus der folgenden Gruppe: Polyamid 612, Polyamid 614, Polyamid 616 und Polyamid 618.

Das weitere andere Polyamid ist dabei kein Polyamid 6.

Nach der Erfindung enthält das Material der Aussenschicht, oder vorzugsweise sogar alle der Schichten des Mehrschichtverbundes, keine Polyamid-Elastomere (TPE-A), wie beispielsweise aus der Gruppe der Polyetheramide, der Polyesteramide, der Polyetheresteramide, der Polyetheresteretheramide und Gemische daraus.

Eine erste bevorzugte Ausführungsform ist dadurch gekennzeichnet, dass die Aussenschicht einen Weichmacher, z.B. basiert auf Sulfonamiden oder
Hydroxybenzoesäureestern, insbesondere ausgewählt als N-Butylbenzolsulfonamid (BBSA), enthält, einen Schlagzähmodifikator und einen Haftvermittler. So kann insbesondere die für die genannten Anwendungen geforderte Schlagzähigkeit erreicht werden.

Als Hydroxybenzoesäureester-basierte Weichmacher kommen z.B. Systeme wie folgt in Frage: 2-Hexyldecyl-4-hydroxybenzoat, Hexyloxyethoxyethyl p-hydroxybenzoat; Hexyloxypropoxypropyl p-hydroxybenzoat; Hexyloxybutoxybutyl p-hydroxybenzoat; Octyloxyethoxyethyl p-hydroxybenzoat; Octyloxypropoxypropyl p-hydroxybenzoat; Octyloxybutoxybutyl p-hydroxybenzoat; 2'-Ethylhexyloxyethoxyethyl p-hydroxybenzoat; 2'-Ethylhexyloxypropoxypropyl p-hydroxybenzoat; 2'-Ethylhexyloxybutoxybutyl p-hydroxybenzoat; Decyloxyethoxyethyl p-hydroxybenzoat; Decyloxypropoxypropyl p-hydroxybenzoat; Decyloxybutoxybutyl p-hydroxybenzoat, oder Mischungen davon. Bevorzugtermassen enthält die Aussenschicht gemäss einer weiteren bevorzugten Ausführungsform wenigstens folgende weiteren Bestandteile:
(C1) einen Weichmacher, insbesondere vorzugsweise ausgewählt als BBSA, HDPB (2-Hexyldecyl-4-hydroxybenzoat, CAS 148348-12-3) oder eine Mischung davon,
(C2) wenigstens einen Schlagzähmodifikator, und
(C3) wenigstens einen Haftvermittler.

Der Anteil an Weichmacher (C1) liegt bevorzugtermassen im Bereich von 3-12 Gewichtsprozent oder im Bereich von 5-8 Gewichtsprozent.

Der Anteil an Schlagzähmodifikator (C2) legt bevorzugtermassen im Bereich von 10-30 Gewichtsprozent, oder im Bereich von 10-20 Gewichtsprozent.

Der Anteil an Haftvermittler (C3) liegt bevorzugtermassen im Bereich von 3-12 Gewichtsprozent oder im Bereich von 5-10 Gewichtsprozent.

Diese Mengenangaben der Komponenten (C1)-(C3) sind jeweils bezogen auf die Gesamtmasse des Materials zur Herstellung der Aussenschicht als 100 Gewichtsprozent zu verstehen.

Vorzugsweise besteht dabei die Aussenschicht ausschliesslich aus den Komponenten (A), (B), (C1), (C2) und (C3) sowie gegebenenfalls Additive, wobei diese insbesondere bevorzugt aus einem Kupferstabilisator und einem Farbmasterbatch bestehen.

Eine weitere bevorzugte Ausführungsform des vorgeschlagenen Mehrschichtverbundes ist dadurch gekennzeichnet, dass es sich beim Schlagzähmodifikator der Aussenschicht (oder aber auch der Innenschicht) um ein mit einem Anhydrid, insbesondere mit Maleinsäureanhydrid, gepfropftes Ethylen/α-Olefin-Copolymeres, insbesondere Ethylen/Butylen oder Ethylen/Propylen Copolymer, handelt. Auch Mischungen von verschiedenen derartigen Systemen sind möglich.

Weiterhin bevorzugtermassen handelt es sich beim Haftvermittler der Aussenschicht um ein mit einem Anhydrid, insbesondere mit Maleinsäureanhydrid, gepfropftes Polyethylen, insbesondere um ein derart gepfropftes LLDPE.

Die Aussenschicht des Mehrschichtverbundes kann gemäss einer weiteren bevorzugten Ausführungsform bestehen aus:
(A) 5-35 Gewichtsprozent Polyamid 6;
(B) 30-60 Gewichtsprozent wenigstens einem der genannten anderen Polyamide ausgewählt aus der folgenden Gruppe: Polyamid 612, Polyamid 614, Polyamid 616 und Polyamid 618;
(C) 20-40 Gewichtsprozent weitere Bestandteile verschieden von (A) und (B);
wobei die Summe der Komponenten (A)-(C) 100 Gewichtsprozent des Materials zur Herstellung der Aussenschicht ausmacht.

Vorzugsweise setzen sich die weiteren Bestandteile (C) wie folgt zusammen:
(C1) 3-8 Gewichtsprozent Weichmacher;
(C2) 9-30 Gewichtsprozent Schlagzähmodifikator;
(C3) 3-10 Gewichtsprozent Haftvermittler;
(C4) 0-3 Gewichtsprozent Additive, insbesondere Verarbeitungshilfsmittel, UV-Stabilisatoren, Wärmestabilisatoren, Pigmente, Masterbatchträger oder Mischungen davon. Dabei beziehen sich die Anteile von (Cl)-(C4) auf die 100 Gewichtsprozent des Materials zur Herstellung der Aussenschicht gebildet durch die Summe aus (A) - (C).

Vorzugsweise ist das andere Polyamid (B) ausschliesslich Polyamid 616 oder 612.

Der Mehrschichtverbund ist bevorzugt dadurch gekennzeichnet, dass das wenigstens eine der genannten andere Polyamide (B) der Aussenschicht (5) ausgewählt aus der folgenden Gruppe: Polyamid 612, Polyamid 614, Polyamid 616 und Polyamid 618, oder alle, wenn in einer Mischung vorliegend, eine relative Lösungsviskosität, gemessen in m-Kresol nach ISO 307 (2007) bei einer Temperatur von 20 °C, im Bereich von 2.0-2.5, vorzugsweise von 2.15-2.44, aufweist.

Das wenigstens eine der genannten anderen Polyamide (B) der Aussenschicht (5) ausgewählt aus der folgenden Gruppe: Polyamid 612, Polyamid 614, Polyamid 616 und Polyamid 618 verfügt weiter bevorzugt über einen Schmelzpunkt im Bereich von 180-240°C, vorzugsweise 185-225 °C.

Etwas konkreter verfügt vorzugsweise eingesetztes Polyamid 612 oder 616 der Aussenschicht über eine relative Lösungsviskosität, gemessen in m-Kresol nach ISO 307 (2007) bei einer Temperatur von 20 °C, im Bereich von 2.10-2.25, und/oder über einen Schmelzpunkt im Bereich von >200 °C.

Weiter ist bevorzugt, dass das Polyamid 6 der Aussenschicht eine relative Lösungsviskosität gemessen in Schwefelsäure (1 g Polyamid in 100 ml Schwefelsäure) nach ISO 307 (2007) bei einer Temperatur von 20 °C im Bereich von 3.0-3.8, vorzugsweise 3.30-3.7, insbesondere vorzugsweise 3.35-3.5 aufweist, und/oder dass das Polyamid 6 der Aussenschicht einen Schmelzpunkt im Bereich von 200-240 °C, vorzugsweise 210-230 °C aufweist.

Die Innenschicht kann bevorzugt eine Kupferstabilisierung aufweisen, vorzugsweise auf Basis von CuI, in einem Anteil im Bereich von 0.01-0.10 Gewichtsprozent, oder in einem Anteil von 0.03-0.07 Gewichtsprozent.

Weiterhin kann die Innenschicht einen Schlagzähmodifikator enthalten, vorzugsweise in einem Anteil im Bereich von 10-25 Gewichtsprozent oder in einem Bereich von 10-20 Gewichtsprozent. Beim Schlagzähmodifikator handelt es sich vorzugsweise um ein mit einem Anhydrid, insbesondere mit Maleinsäureanhydrid, gepfropftes Ethylen/α-Olefin-Copolymeres, insbesondere derart gepfropftes Ethylen/Butylen oder Ethylen/Propylen Copolymer. Auch Mischungen von verschiedenen derartigen Systemen sind möglich. Hier beziehen sich die Gewichtsprozent jeweils auf 100 Gewichtsprozent des Materials zur Herstellung der Innenschicht.

Der Mehrschichtverbund kann weiterhin bevorzugt dadurch gekennzeichnet sein, dass die Innenschicht besteht aus:
(A_I) Polyamid 6, vorzugsweise mit einer relativen Lösungsviskosität, gemessen in Schwefelsäure (1 g Polyamid in 100 ml Schwefelsäure) nach ISO 307 (2007) bei einer Temperatur von 20 °C, im Bereich von 3.5-3.8, vorzugsweise 3.6-3.75.
(B_I) 10-30 Gewichtsprozent Schlagzähmodifikator
(C_I) 0.01-0.1 Gewichtsprozent Kupferstabilisator
(D_I) 0-15 Gewichtsprozent, vorzugsweise 5 - 10 oder 0-1 Gewichtsprozent Additive, vorzugsweise ausgewählt aus der Gruppe: Leitfähigkeitsadditive, Kristallisationsbeschleuniger, Verarbeitungshilfsmittel, Gleitmittel, und Mischungen davon,
wobei sich die Summe der Komponenten (A_I)-(D_I) auf 100 Gewichtsprozent des Materials zur Herstellung der Innenschicht ergänzen.

Vorzugsweise ist die Innenschicht leitfähig ausgerüstet, vor allem dann, wenn es keine weitere innerste Schicht gibt. In diesem Fall ist der Anteil der Komponente (D_I) typischerweise im Bereich von 5-15 Gewichtsprozent, und im Bereich von 5-10 Gewichtsprozent (bezogen auf die Summe der Komponenten (A_I)-(D_I)) werden von einem Leitfähigkeitsadditiv gebildet.

Eine weitere bevorzugte Ausführungsform ist dadurch gekennzeichnet, dass die Komponente (D_I) wenigstens ein Leitfähigkeitsadditiv enthält diese Komponente durch ein Leitfähigkeitsadditiv allein gebildet wird, vorzugsweise in einem Anteil im Bereich von 0.1-15 Gewichtsprozent, bezogen auf die Gesamtmasse der Innenschicht. Als elektrisch leitfähiges Material im Sinne des Leitfähigkeitsadditivs können Partikel aus Metallfasern, Metallpulver, Metalloxidpulver, leitfähigem Russ, leitfähiger Kohlefaser, leitfähigen Kohlenstoff-Nanoröhrchen, leitfähigem Graphitpulver, leitfähiger Graphitfaser, Graphen, Bronzepulver, Bronzefaser, Stahlpulver, Stahlfaser, Eisenpulver, Eisenfaser, Kupferpulver, Kupferfaser, Silberpulver, Silberfaser, Aluminiumpulver, Aluminiumfaser, Nickelpulver, Nickelfaser, Wolframpulver, Wolframfaser, Goldpulver, Goldfaser, Kupfer-Mangan-Legierungspulver, Kupfer-Manganfaser und Kombinationen daraus oder Mischungen davon in die Innenschicht als Komponente (D_I) gemischt werden. Wenn die Innenschicht auf diese Weise mit elektrischer Leitfähigkeit versehen wird, weist die Innenschicht vorzugsweise einen elektrischen Oberflächenwiderstand von nicht mehr als 10⁸ Ω oder nicht mehr als 10⁶ Ω auf, bevorzugt nicht mehr als 10 Ω. Der Anteil des elektrisch leitfähigen Materials wird vorzugsweise so festgelegt, dass der elektrische Oberflächenwiderstand der Innenschicht in den genannten Bereich fällt. Bevorzugtermassen weisen die leitfähigen Partikeln des Leitfähigkeitsadditivs einen mittleren Querschnittsdurchmesser von etwa 0,1 Mikron bis etwa 100 Mikron auf. Die leitfähigen Partikel können mit einer Beschichtung beschichtet sein, um beschichtete leitende Partikel als die leitenden Partikel bereitzustellen.

Die Mittelschicht besteht typischerweise aus einem EVOH mit einem Ethylen-Anteil im Bereich von 20-25 Gewichtsprozent, vorzugsweise im Bereich von 25-30 Gewichtsprozent.

Die Innenschicht einer solchen Struktur verfügt vorzugsweise über eine Dicke im Bereich von 0.3-0.6 mm, vorzugsweise im Bereich von 0.4-0.5 mm.

Die Mittelschicht verfügt vorzugsweise eine Dicke im Bereich von 0.05-0.2 mm, vorzugsweise im Bereich von 0.075-0.125 mm.

Die Aussenschicht verfügt vorzugsweise über eine Dicke im Bereich von 0.3-0.6 mm, vorzugsweise im Bereich von 0.4-0.5 mm.

Die innerste Schicht verfügt vorzugsweise über eine Dicke im Bereich von 0,08 - 1 mm, vorzugsweise im Bereich von 0,1 - 0,9 mm.

Was die Gesamtstruktur angeht, so ist vorzugsweise die Gesamtwandstärke des Mehrschichtverbundes im Bereich von 0.5-2.5 mm, bevorzugtermassen im Bereich von 0.75-1.5 mm.

Bevorzugt ist/wird die vorgeschlagene Mehrschichtstruktur in einem Coextrusionsprozess hergestellt.

Der Mehrschichtverbund kann in Form einer Leitung vorliegen, welche wenigstens abschnittsweise als Wellrohr ausgebildet sein kann, vorzugsweise als Kraftstoffleitung für Verbrennungsmotoren, insbesondere im Automobilbereich.

Gemäss einer bevorzugten Ausführungsform besteht die Leitung ausschliesslich aus der Innenschicht, der Mittelschicht und der Aussenschicht.

Wenn es eine innerste Schicht gibt, so ist diese bevorzugter Massen auf Polyamid-Basis oder auf Basis eines thermoplastischen Fluorpolymers ausgebildet.

Die Polyamid-Basis ist dann vorzugsweise ausgewählt ist aus der Gruppe bestehend aus: PA 6, PA 12, PA 612, PA 10T/6T, PA 1212, PA 66, PA 11, PA 106, PA 1012, PA 10T/612, PA 10T/610, PA 9T. Eine solche innerste Schicht auf Basis von Polyamid enthält ein Leitfähigkeitsadditiv und kann zusätzlich Weichmacher, Schlagzähmodifikator, Haftvermittler und/oder Additive enthalten. Beispielsweise 1-15 Gewichtsprozent Leitfähigkeit Additiv, 3-8 Gewichtsprozent Weichmacher, 9-30 Gewichtsprozent Schlagzähmodifikator, 3-10 Gewichtsprozent Haftvermittler, 0-3 Gewichtsprozent Additive, insbesondere Verarbeitungshilfsmittel, UV-Stabilisatoren, Wärmestabilisatoren, Pigmente, Masterbatchträger oder Mischungen davon, der Rest wird durch das Polyamid oder die Mischung von Polyamiden gebildet. Dabei beziehen sich die Anteile von auf die 100 Gewichtsprozent des Materials zur Herstellung der innersten Schicht

Das thermoplastische Fluorpolymer für die innerste Schicht basiert vorzugsweise wenigstens auf Ethylen und Tetrafluoroethylen, mit oder ohne weitere Blöcke ausgewählt aus der Gruppe: Propylen-, insbesondere Hexafluoropropylen-Blöcke, Hexen, insbesondere Perfluorohexen-Blöcke, vorzugsweise als fluorhaltiges ethylenisches Polymer mit einer Carbonylgruppe, das insbesondere bevorzugt keine Amid-, Imid-, Urethan- oder Harnstoffgruppe enthält.

Die innerste Schicht kann gemäss einer weiteren bevorzugten Ausführungsform aus folgenden Bestandteilen bestehen:
(a) 75-100 Gewichtsprozent, vorzugsweise 85-98 Gewichtsprozent der genannten Polyamid-Basis oder Fluorpolymer basierend wenigstens auf Ethylen und Tetrafluoroethylen, mit oder ohne Hexafluoropropylen-Blöcke und /oder Perfluorohexen-Blöcke, vorzugsweise mit Carbonylgruppen;
(b) 0-25 Gewichtsprozent Additive verschieden von (c);
(c) 0.1-20 Gewichtsprozent Leitfähigkeitsadditiv;
wobei sich die Komponenten (a) und (c) auf 100 Gewichtsprozent des Materials der innersten Schicht ergänzen.

Die Komponente (b) ist dabei vorzugsweise ausgewählt aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Gleitmittel oder Mischungen davon.

Insbesondere vorzugsweise ist die Komponente (c) wenigstens ein Additiv zur Erhöhung elektrischer Leitfähigkeit, vorzugsweise in Form von Partikeln aus Metallfasern, Metallpulver, Metalloxidpulver, leitfähigem Russ, leitfähiger Kohlefaser, leitfähigen Kohlenstoff-Nanoröhrchen, leitfähigem Graphitpulver, leitfähiger Graphitfaser, Graphen, Bronzepulver, Bronzefaser, Stahlpulver, Stahlfaser, Eisenpulver, Eisenfaser, Kupferpulver, Kupferfaser, Silberpulver, Silberfaser, Aluminiumpulver, Aluminiumfaser, Nickelpulver, Nickelfaser, Wolframpulver, Wolframfaser, Goldpulver, Goldfaser, Kupfer-Mangan-Legierungspulver, Kupfer-Manganfaser und Kombinationen davon enthält.

Die Komponente (c) enthält vorzugsweise wenigstens ein Leitfähigkeitsadditiv in einem Anteil im Bereich von 1-15 Gewichtsprozent, insbesondere in einem Anteil von 3-8 Gewichtsprozent, bezogen auf die Gesamtmasse der innersten Schicht.

Wenn die innerste Schicht auf diese Weise mit elektrischer Leitfähigkeit versehen wird, weist sie vorzugsweise einen elektrischen Oberflächenwiderstand von nicht mehr als 10⁸ Ω oder nicht mehr als 10⁶ Ω auf, bevorzugt nicht mehr als 10 Ω. Der Anteil des elektrisch leitfähigen Materials wird vorzugsweise so festgelegt, dass der elektrische Oberflächenwiderstand der Innenschicht in den genannten Bereich fällt. Bevorzugtermassen weisen die leitfähigen Partikeln des Leitfähigkeitsadditivs einen mittleren Querschnittsdurchmesser von etwa 0,1 Mikron bis etwa 100 Mikron auf. Die leitfähigen Partikel können mit einer Beschichtung beschichtet sein, um beschichtete leitende Partikel als die leitenden Partikel bereitzustellen.

Des Weiteren betrifft die vorliegende Erfindung ein Verfahren zur Herstellung eines Mehrschichtverbundes, wie er oben beschrieben wurde, wobei das Verfahren bevorzugtermassen dadurch gekennzeichnet ist, dass wenigstens 2, vorzugsweise alle 3 oder 4 Schichten, in einem kontinuierlichen und/oder diskontinuierlichen Prozess, bevorzugt in einem Extrusionsblasformen, einer Tandemextrusion, einem Ummantelungsverfahren oder einem Coextrusionsprozess, zu einem Hohlkörper, insbesondere bevorzugt zu einem Rohr respektive einer Leitung oder einem Behälter geformt werden.

Weiterhin betrifft die vorliegende Erfindung die Verwendung eines derartigen Mehrschichtverbundes als Leitung für Verbrennungsmotoren, insbesondere im Automobilbereich, insbesondere für Kraftstoff (z.B. Diesel oder Benzin), Harnstoff oder Kühlmittel.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigt:
- Fig. 1: eine Kraftstoffleitung mit drei Schichten in einer Schnittdarstellung senkrecht zur Verlaufsrichtung;
- Fig. 2: eine Kraftstoffleitung mit vier Schichten in einer Schnittdarstellung senkrecht zur Verlaufsrichtung.

### BESCHREIBUNG BEVORZUGTER AUSFÜHRUNGSFORMEN

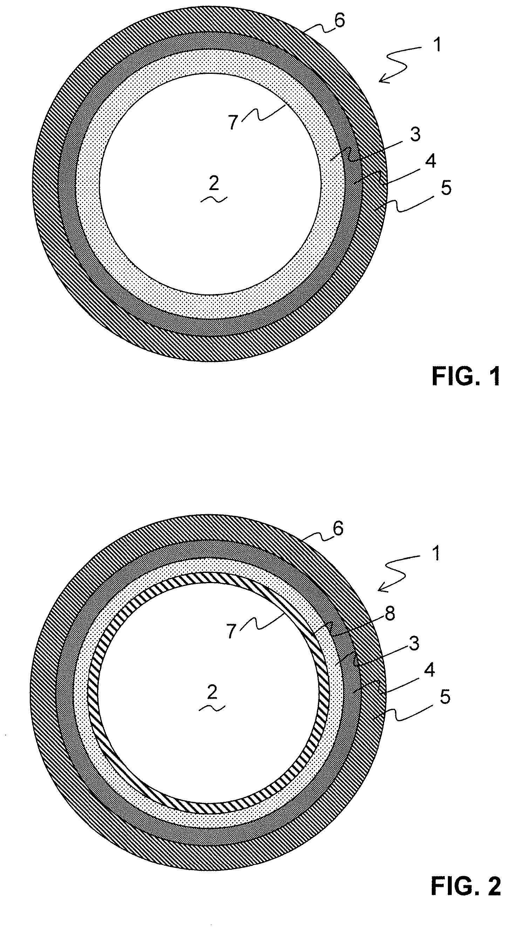

Figur 1 zeigt eine beispielhafte Kraftstoffleitung 1 nach der Erfindung in einem Schnitt quer zur Hauptverlaufsrichtung.

Die Querschnittsfläche kann dabei über die Hauptverlaufsrichtung konstant sein, d. h. das Rohr kann eine im Wesentlichen hohlzylindrische Form haben.

Die Querschnittsfläche kann aber auch über die Hauptverlaufsrichtung variieren, beispielsweise in Form eines Wellrohres.

Ein Innenraum 2 wird von der Rohrwand umschlossen. Auf den Innenraum 2 folgt zunächst radial nach aussen eine Innenschicht 3, welche mit der Innenfläche 7 an den Innenraum 2 grenzt und diesen begrenzt. Diese Innenschicht ist auf Basis von Polyamid 6 ausgebildet ohne weitere andere Polyamid-Bestandteile.

Direkt angrenzend an die Innenschicht 3 ohne dazwischenliegende Haftvermittlerschicht folgt eine Mittelschicht 4 im Sinne einer Barriereschicht, diese ist auf Basis von EVOH ausgebildet.

Direkt angrenzend nach aussen an diese Mittelschicht 4 und wiederum ohne dazwischenliegende Haftvermittlerschicht folgt die Aussenschicht 5. Die Aussenschicht 5 ist auf Basis von Polyamid 616 in einer Mischung mit PA 6 ausgebildet. Die Aussenfläche 6 der Aussenschicht 5 begrenzt die Leitung nach aussen.

Eine alternative beispielhafte Kraftstoffleitung nach der Erfindung ist in Figur 2 dargestellt. Hier gibt es neben den oben bereits geschilderten drei Schichten noch eine weitere innerste Schicht 7, die die Kraftstoffleitung nach innen abschliesst und in diesem Fall direkt an den Innenraum 2 grenzt. Diese innerste Schicht ist leitfähig ausgerüstet, d. h. sie verfügt beispielsweise über Zuschläge aus leitfähigen Partikeln, zum Beispiel leitfähigen Russ.

### Eingesetzte Ausgangsmaterialien:

Polyamid 6 (I) (Aussenschicht):
   ηᵣₑₗ = 3,4 (Schwefelsäure);
   Tₘ gemessen mit DSC gemäss ISO 11357 (2011) = 222 °C.
Polyamid 612 (Aussenschicht):
   ηᵣₑₗ = 2,3 (m-Kresol);
   Tₘ gemessen mit DSC gemäss ISO 11357 (2011) = 218 °C.
Polyamid 616 (Aussenschicht):
   ηᵣₑₗ = 2,2 (m-Kresol);
   Tₘ gemessen mit DSC gemäss ISO 11357 (2011) = 196 °C.
Polyamid 12 (Aussenschicht, VB):
   Grilamid L25, hochviskoses Polyamid 12, Handelsprodukt der Firma EMS-CHEMIE AG, Domat/Ems, Schweiz
   Melt volume rate (MVR): 275°C / 5 kg, ISO 1133;
   Tₘ gemessen mit DSC gemäss ISO 11357 (2011) = 178 °C.
Polyamid 610 (Aussenschicht, VB):
   Grilamid 2S 20 Natur, Polyamid 610 mit relativer Viskosität 1,9-2,0, Handelsprodukt der Firma EMS-CHEMIE AG, Domat/Ems, Schweiz;
   Tₘ gemessen mit DSC gemäss ISO 11357 (2011) = 213 °C.
Polyamid 6 (II) (Innenschicht):
   ηᵣₑₗ = 3,7 (Schwefelsäure);
   Tₘ gemessen mit DSC gemäss ISO 11357 (2011) = 222 °C.
Ethylenvinylalkohol (Barriereschicht):
   Als Material für die Barriereschicht wurde ein Ethylen/Vinylalkohol-Copolymer (EVOH) verwendet. Konkret handelte es sich bei den Ausführungsbeispielen um ein Produkt der Firma KURARAY, welches unter dem Namen EVAL^{®} unter der Produktkennzeichnung F170B erhältlich ist und einen Ethylen-Gehalt von 27 mol% aufweist. Es ist in Europa erhältlich bei der Firma EVAL Europe N.V. in Zwijindrecht, Belgien.
Weichmacher (Aussenschicht):
   Als Weichmacher (WM) wurde BBSA (N-Butylbenzolsulfonamid) verwendet. Dieses ist erhältlich unter dem Markennamen Uniplex 214, von Lanxess.
Schlagzähmodifikator (für Innenschicht und Aussenschicht):
   Als Schlagzähmodifikator (SZM) wurden säuremodifizierte Ethylen/α-Olefin-Copolymere eingesetzt, nämlich mit Maleinsäureanhydrid gepfropfte Ethylen-Butylen-sowie Ethylen-Propylen-Copolymere sowie deren Mischungen.
Schlagzähmodifikator der Innenschicht:
   MVR-Wert (gemessen bei 230°C/2.16 kg) von 1.2 g/10min (ASTM D1238),
   DSC-Glasübergangstemperatur, gemäss ISO-Norm 11357-2 (2013) von -65 °C,
   erhältlich unter der Bezeichnung Tafmer MH5020C von Mitsui Chemicals.
Schlagzähmodifikator der Aussenschicht bzw. der Innenschicht des Vergleichsbeispiels:
   MVR-Wert (gemessen bei 230°C/2.16 kg) von 1.3 g/10min (ASTM D1238),
   DSC-Glasübergangstemperatur, gemäss ISO-Norm 11357-2 (2013) von -60 °C,
   erhältlich unter der Bezeichnung Tafmer MC201 von Mitsui Chemicals.
Kupferstabilisator (Innenschicht):
   Als Kupferstabilisator wurde CuI/KI (Gewichtsverhältnis 1:6) in einem Anteil von 0.05 Gewichtsprozent bezogen auf die Gesamtmasse der Innenschicht eingesetzt. Das Kupfer-(I)-iodid ist von der Firma Merck KGaA kommerziell erhältlich, und das Kaliumiodid von der Firma Liquichem Handelsgesellschaft mbH erhältlich.
Haftvermittler (Aussenschicht):
   Als Haftvermittler (HVM) wurde ein mit Maleinsäureanhydrid gepfropftes LLDPE eingesetzt, es ist erhältlich von der Firma Mitsui Chemicals unter der Bezeichnung Admer NF358E, es verfügt über einen MFR (190°C, 2.16kg) von 1.6 g/10 min (ASTM D1238), über eine Dichte von 0.91 g/cm³ (ASTM D1505), und über einen Vicat Softening Point von 82 °C (ASTM D1525). Tm, gemessen in DSC gemäss ISO 11357-3 (2011) liegt bei 120 °C.
Masterbatch (Aussenschicht):
   Euthylen Schwarz, Russ-basiertes (40%) Farbmasterbatch auf Basis PE, erhältlich von BASF (Ludwigshafen, DE)

### Herstellung der Prüfkörper:

Rohre wurden co-extrudiert bei Massen-Temperaturen zwischen 210 und 260 °C unter Vakuum von -56 mbar und einer Extrusionsgeschwindigkeit von 32,8 m/min. Als Prüfkörper wurden Rohre mit einen Aussendurchmesser von 8 mm, der Wandstärke von 1 mm eingesetzt. Die Länge des Rohres wurde je nach Prüfungsanforderungen angepasst. Die Dicke der Innenschicht betrug 0.45 mm, jene der Mittelschicht 0.10 mm, und jene der Aussenschicht 0.45 mm.

### An den Rohraufbauten durchgeführte Tests:

***Auswaschung*:** Prüfung gemäss SAE J2260 mit Prüfkraftstoff FAM-B (gemäss SAE J1681 (2000)) - Test 96 Stunden, 60 °C verschlossenes Rohr von 200 cm; maximal Extrakt gemäss VW TL 52712 6 g/m².

***Kälteverhalten*:** wird in Anlehnung an TL 52712 gemäss VW-Norm PV 3905 geprüft. Die Fallhöhe der Kugel beträgt 65 cm. Mindestens 10 Prüflinge werden gemessen und die Anzahl der Brüche wird in Prozenten angegeben.

***Rohrzugversuch*:** Rohrzugversuche wurden gemäss ISO 527-2 (2012) durchgeführt. Für Versuche wurden Prüfkörper der Länge 150 mm (Zugversuche in Extrusionsrichtung) oder 10 mm (bei Zugversuchen quer zur Extrusionsrichtung) verwendet. Die Prüftemperatur betrug 23 °C und die Prüfgeschwindigkeit 100 mm/min (für Versuche in Extrusionsrichtung) oder 25 mm/min, wenn Versuche quer zur Extrusionsrichtung erfolgten.

Konkret wurden folgende Messungen nach ISO 527 durchgeführt: Reissdehnung in Extrusionsrichtung, Reissdehnung quer zur Extrusionsrichtung, Streckspannung in Extrusionsrichtung, Streckspannung quer zur Extrusionsrichtung.

***Schichthaftung*:** wurde gemäss SAE J2260 geprüft.

***Relative Viskosität*:** DIN EN ISO 307 (2007), in 0,5 Gew.-%-iger m-Kresollösung oder 1 Gew-%-iger Schwefelsäurelösung (PA6) bei einer Temperatur von 20 °C.

***Thermisches Verhalten*** (Schmelzpunkt Tₘ, Schmelzenthalpie und Glasumwandlungstemperatur (T_{g}): ISO-Norm 11357-1 (2016), -2 (2013) und -3 (2011), Granulat, die Differential Scanning Calorimetry (DSC) wurde mit Aufheizrate von 20 °C/min durchgeführt.

**Tabelle1: Zusammensetzungen und Aufbau**

| | | B1 | | B2 | | VB1 | |
|---|---|---|---|---|---|---|---|
| | Einheit | Aussenschicht | Innenschicht | Aussenschicht | Innenschicht | Aussenschicht | Innenschicht |
| Polyamid 612 | Gew.-% | 44.25 | - | - | - | 72 | - |
| Polyamid 616 | Gew.-% | - | - | 44.25 | - | - | - |
| Polyamid 6 (I) | Gew.-% | 25.0 | - | 25.0 | - | - | - |
| Polyamid 6 (II) | Gew.-% | - | 78.55 | - | 78.55 | - | 70.1 |
| SZM (Tafmer MC201) | Gew.-% | 20.0 | - | 20 | - | 18 | 19.5 |
| SZM (Tafmer MH5020C) | Gew.-% | - | 20.00 | - | 20 | - | - |
| HVM | Gew.- | 5.0 | - | 5.0 | - | - | - |
| WM | Gew.-% | 5.0 | - | 5.0 | - | 10 | 5.0 |
| CuI/KI | Gew.-% | - | 0.05 | - | 0.05 | - | - |
| Schwarzer Masterbatch | Gew.-% | 0.75 | 1.4 | 0.75 | 1.4 | - | 5.4 |

**Tabelle 2: Mechanische und chemische Prüfungsresultate**

| | | B1 | B2 | VB1 |
|---|---|---|---|---|
| Streckspannung in Extrusionsrichtung | N/mm² | 35 | 38 | 30 |
| Streckspannung quer zur Extrusionsrichtung | N/mm² | 37 | 42 | 32 |
| Reissdehnung in Extrusionsrichtung | % | 344 | 366 | 300 |
| Reissdehnung quer zur Extrusionsrichtung | % | 320 | 330 | 280 |
| Kälteschlag, - 25 °C, Kugelmasse 880 g | % | Kein Bruch | Kein Bruch | 20 |
| Kälteschlag, - 40 °C, Kugelmasse 500 g | % | Kein Bruch | Kein Bruch | 40 |
| Auswaschbeständigkeit, gemäss TL 52712 | g/m² | 5.6 | 4.4 | 33.7 |
| Schichthaftung | | Schichten nicht trennbar | Schichten nicht trennbar | Aussenschicht trennbar |

Während alle Beispiele akzeptable mechanische Eignung für die Anwendung im Automobilbereich aufweisen, ist das Kälteverhalten der Rohre mit einem Aufbau nach der Erfindung eine unerwartete und deutliche Verbesserung gegenüber dem Vergleichsbeispiel. Das Vergleichsbeispiel kann die industriellen Anforderungen klar nicht erfüllen. Auch hinsichtlich Reisdehnung sind die erfindungsgemässen Aufbauten unerwartet vorteilhaft. Die Formmassen aller Beispiele lassen sich co-extrudieren, aber nur die erfindungsgemässen Beispiele zeigen gute Haftung zwischen der Aussenschicht und der Zwischenschicht aus EVOH.

Die unerwartet gute Eignung der Rohre mit einem Aufbau nach der Erfindung für die Anwendung ist auch durch die sehr gute Auswaschbeständigkeit gezeigt. Die industrielle Anforderung gemäss TL 52712 ist eine Auswaschung von weniger 6 g/m² Rohroberfläche. Diese Anforderung wird hier nur mit den erfindungsgemässen Beispielen erfüllt.

Um einen weiteren Vergleich mit Strukturen nach dem Stand der Technik zu ermöglichen, insbesondere zum Vergleich mit den Beispielen der EP-A-1 884 356, wurden die in Tabelle 3 angegebenen Strukturen nach dem gleichen Verfahren hergestellt und auf Eigenschaften wie in Tabelle 4 angegeben getestet.

**Tabelle3: Zusammensetzungen und Aufbau weiterer Vergleichsbeispiele VB2 und VB3**

| | | VB2 | | VB3 | |
|---|---|---|---|---|---|
| | Einheit | Aussenschicht | Innenschicht | Aussenschicht | Innenschicht |
| Polyamid 6 (I) | Gew.-% | 42.5 | | 42.5 | |
| Polyamid 6 (II) | Gew.-% | | 83 | | |
| Polyamid 12 | Gew.-% | 42.5 | | | |
| Polyamid 610 | Gew.-% | | | | 83 |
| Grilon XE 3871 | Gew.-% | | | 42.5 | |
| SZM (Tafmer MC201) | Gew.-% | 15 | 10 | 15 | |
| SZM (Tafmer MH5020C) | Gew.-% | | | | 10 |
| WM | Gew.-% | | 7 | | 7 |

**Tabelle 4: Mechanische und chemische Prüfungsresultate VB2 und VB3**

| | | VB2 | VB3 |
|---|---|---|---|
| Streckspannung in Extrusionsrichtung | N/mm² | 30 | 28 |
| Streckspannung quer zur Extrusionsrichtung | N/mm² | 32 | 30 |
| Reissdehnung in Extrusionsrichtung | % | 298 | 276 |
| Reissdehnung quer zur Extrusionsrichtung | % | 280 | 249 |
| Kälteschlag, -25°C, Kugelmasse 880 g | % | 30 | 30 |
| Kälteschlag, -40°C, Kugelmasse 500 g | % | 40 | 40 |
| Auswaschbeständigkeit, gemäss TL 52712 | g/m² | 42 | 48 |
| Schichthaftung | | Aussenschicht trennbar | Aussenschicht trennbar |

Eine Nacharbeitung der Strukturen aus der D1 zeigt schlechte mechanische Eigenschaften, insbesondere bei Schlagzähigkeit sowie hinsichtlich Auswaschung. Die schlechte Zusammensetzung/Kombination der Schichten führt auch zu Schichttrennung.

Die Reihenfolge der Additive (Weichmacher) ist umgekehrt in der D1, somit lehrt die Zusammensetzung und Struktur der D1 weg vom erfindungsgemässen Aufbau, sprich den Zusammensetzungen und Reihenfolgen der Schichten wie beansprucht.

Besonders hervorzuheben im Zusammenhang mit der D1 ist, dass die Innenschichten der D1 mehrheitlich mit Weichmacher versehen sind, die Auswaschung ist dann inakzeptabel.

**BEZUGSZEICHENLISTE**

| | | | |
|---|---|---|---|
| 1 | Kraftstoffleitung | 5 | Aussenschicht |
| 2 | Innenraum von 2 | 6 | Aussenfläche von 1 |
| 3 | Innenschicht | 7 | Innenfläche von 1 |
| 4 | Mittelschicht | 8 | innerste Schicht von 1 |

## Patentansprüche

1. Mehrschichtverbund (1) in Form eines einen Innenraum (2) umschliessenden Hohlkörpers bestehend aus drei Schichten, einer an den Innenraum (2) angrenzenden Innenschicht (3), einer an diese grenzenden Mittelschicht (4) und einer an die Mittelschicht (4) grenzenden, den Mehrschichtverbund (1) nach aussen abschliessenden Aussenschicht (5),
wobei die Innenschicht (3) auf Basis von Polyamid 6 ausgebildet ist,
die Mittelschicht (4) auf Basis von EVOH ausgebildet ist,
und die Aussenschicht (5) auf Basis einer Mischung von
(A) Polyamid 6 und
(B) wenigstens einem weiteren anderen Polyamid, ausgewählt aus der folgenden Gruppe: Polyamid 612, Polyamid 614, Polyamid 616 und Polyamid 618,
ausgebildet ist, wobei das Material der Aussenschicht keine Polyamid-Elastomere (TPE-A) enthält,
oder bestehend aus vier Schichten, den genannten drei Schichten (3-5) und einer weiteren innersten Schicht (8), die direkt an die genannte Innenschicht (3) grenzt, und leitfähig ausgerüstet ist.

2. Mehrschichtverbund nach Anspruch 1, **dadurch gekennzeichnet, dass** die Aussenschicht (5) wenigstens folgende weiteren Bestandteile enthält:
(C1) einen Weichmacher, insbesondere vorzugsweise ausgewählt als Hydroxybenzoesäureester- oder Sulfonamid-basierter Weichmacher, insbesondere BBSA, HDPB oder eine Mischung davon,
(C2) wenigstens einen Schlagzähmodifikator, und
(C3) wenigstens einen Haftvermittler,
wobei der Anteil an Weichmacher (C1) bevorzugtermassen im Bereich von 3-12 Gewichtsprozent oder im Bereich von 5-8 Gewichtsprozent liegt,
und/oder wobei der Anteil an Schlagzähmodifikator (C2) bevorzugtermassen im Bereich von 10-30 Gewichtsprozent, oder im Bereich von 10-20 Gewichtsprozent liegt,
und/oder wobei der Anteil an Haftvermittler (C3) bevorzugtermassen im Bereich von 3-12 Gewichtsprozent oder im Bereich von 5-10 Gewichtsprozent liegt,
jeweils bezogen auf die Gesamtmasse des Materials zur Herstellung der Aussenschicht als 100 Gewichtsprozent,
wobei vorzugsweise die Aussenschicht (5) ausschliesslich aus den Komponenten (A), (B), (C1), (C2) und (C3) sowie gegebenenfalls Additiven, insbesondere bestehend aus einem Kupferstabilisator und einem Farbmasterbatch, besteht,
wobei es sich beim Schlagzähmodifikator (C2) vorzugsweise um ein mit einem Anhydrid, insbesondere mit Maleinsäureanhydrid, gepfropftes Ethylen/α-Olefin-Copolymeres, insbesondere Ethylen/Butylen oder Ethylen/Propylen Copolymeres, oder deren Mischungen handelt,
und/oder dass es sich beim Haftvermittler (C3) um ein mit einem Anhydrid, insbesondere mit Maleinsäureanhydrid, gepfropftes Polyethylen, insbesondere um ein derart gepfropftes LLDPE handelt.

3. Mehrschichtverbund nach einem der vorhergehenden Ansprüche, dass die Aussenschicht (5) besteht aus:
(A) 5-35 Gewichtsprozent Polyamid 6;
(B) 30-60 Gewichtsprozent wenigstens einem der genannten anderen Polyamide ausgewählt aus der folgenden Gruppe: Polyamid 612, Polyamid 614, Polyamid 616 und Polyamid 618;
(C) 20-40 Gewichtsprozent weitere Bestandteile verschieden von (A) und (B);
wobei die Summe der Komponenten (A)-(C) 100 Gewichtsprozent des Materials zur Herstellung der Aussenschicht ausmacht,
wobei sich vorzugsweise die weiteren Bestandteile (C) wie folgt zusammensetzen:
(C1) 3-8 Gewichtsprozent Weichmacher;
(C2) 9-30 Gewichtsprozent Schlagzähmodifikator;
(C3) 3-10 Gewichtsprozent Haftvermittler;
(C4) 0-3 Gewichtsprozent Additive, insbesondere Verarbeitungshilfsmittel, UV-Stabilisatoren, Wärmestabilisatoren, Pigmente, Masterbatchträger oder Mischungen davon,
wobei sich die Anteile von (C1)-(C4) auf die 100 Gewichtsprozent des Materials zur Herstellung der Aussenschicht gebildet durch die Summe aus (A) - (C) beziehen.

4. Mehrschichtverbund nach einem der vorhergehenden Ansprüche, **dadurch gekennzeichnet, dass** das wenigstens eines der genannten andere Polyamide (B) der Aussenschicht (5), ausgewählt aus der folgenden Gruppe: Polyamid 612, Polyamid 614, Polyamid 616 und Polyamid 618, eine relative Lösungsviskosität, gemessen in m-Kresol nach ISO 307 (2007) bei einer Temperatur von 20 °C, im Bereich von 2.0-2.5, vorzugsweise von 2.15-2.4, aufweist,
und/oder dass das wenigstens eine der genannten anderen Polyamide (B) der Aussenschicht (5), ausgewählt aus der folgenden Gruppe: Polyamid 612, Polyamid 614, Polyamid 616 und Polyamid 618, einen Schmelzpunkt im Bereich von 180-240°C, vorzugsweise 185-225 °C, aufweist,
und/oder dass das Polyamid 6 (A) der Aussenschicht (5) eine relative Lösungsviskosität gemessen in Schwefelsäure nach ISO 307 (2007) bei einer Temperatur von 20 °C im Bereich von 3.0 - 3.8, vorzugsweise 3.30-3.7 aufweist, und/oder dass das Polyamid 6 (A) der Aussenschicht (5) einen Schmelzpunkt im Bereich von 200 - 240 °C, vorzugsweise von 210-230 °C, aufweist.

5. Mehrschichtverbund nach einem der vorhergehenden Ansprüche, **dadurch gekennzeichnet, dass** die Innenschicht (3) eine Kupferstabilisierung aufweist, vorzugsweise auf Basis von CuI, in einem Anteil im Bereich von 0.01-0.10 Gewichtsprozent, oder in einem Anteil von 0.03-0.07 Gewichtsprozent,
und/oder dass die Innenschicht (3) einen Schlagzähmodifikator enthält, vorzugsweise in einem Anteil im Bereich von 10-25 Gewichtsprozent oder in einem Bereich von 10-20 Gewichtsprozent, wobei es sich bevorzugtermassen beim Schlagzähmodifikator um ein mit einem Anhydrid, insbesondere mit Maleinsäureanhydrid, gepfropftes Ethylen/α-Olefin-Copolymeres, insbesondere derart gepfropftes Ethylen/Butylen oder Ethylen/Propylen Copolymer sowie deren Mischungen handelt
und wobei sich die Gewichtsprozente jeweils bezogen sind auf 100 Gewichtsprozent des Materials zur Herstellung der Innenschicht (3).

6. Mehrschichtverbund nach einem der vorhergehenden Ansprüche, **dadurch gekennzeichnet, dass** die Innenschicht (3) besteht aus:
| | |
|---|---|
| (A_I) | Polyamid 6, vorzugsweise mit einer relativen Lösungsviskosität, gemessen in Schwefelsäure nach ISO 307 (2007) bei einer Temperatur von 20 °C im Bereich von 3.5-3.8, vorzugsweise 3.6-3.75; |
| (B_I) | 10-30 Gewichtsprozent Schlagzähmodifikator |
| (C_I) | 0.01-0.1 Gewichtsprozent Hitzestabilisator, vorzugsweise basiert auf Kupfer(I) |
| (D_I) | 0-15 Gewichtsprozent, vorzugsweise 5 - 10 oder 0 - 1 Gewichtsprozent Additive, vorzugsweise ausgewählt aus der Gruppe: Leitfähigkeitsadditive, Kristallisationsbeschleuniger, Verarbeitungshilfsmittel, Gleitmittel, und Mischungen davon |
wobei sich die Summe der Komponenten (A_I) - (D_I) auf 100 Gewichtsprozent des Materials zur Herstellung der Innenschicht (3) ergänzen.

7. Mehrschichtverbund nach einem der vorhergehenden Ansprüche, **dadurch gekennzeichnet, dass** die Mittelschicht (4) aus einem EVOH besteht, vorzugsweise aus einem EVOH mit einem Ethylen-Anteil im Bereich von 20-25 Gewichtsprozent, vorzugsweise im Bereich von 25-30 Gewichtsprozent.

8. Mehrschichtverbund nach einem der vorhergehenden Ansprüche, **dadurch gekennzeichnet, dass**
die Innenschicht (3) eine Dicke im Bereich von 0.3-0.6 mm, vorzugsweise im Bereich von 0.4-0.5 mm aufweist,
und/oder dass die Mittelschicht (4) eine Dicke im Bereich von 0.05-0.2 mm, vorzugsweise im Bereich von 0.075-0.125 mm aufweist,
und/oder dass die Aussenschicht (5) eine Dicke im Bereich von 0.3-0.6 mm, vorzugsweise im Bereich von 0.4-0.5 mm aufweist,
und/oder dass, falls vorhanden, die innerste Schicht (8) eine Dicke im Bereich von 0,08 - 1 mm, vorzugsweise im Bereich von 0,1 - 0,9 mm aufweist,
wobei vorzugsweise die Gesamtwandstärke des Mehrschichtverbundes im Bereich von 0.5-2.5 mm, bevorzugtermassen im Bereich von 0.75-1.5 mm liegt.

9. Mehrschichtverbund nach einem der vorhergehenden Ansprüche, **dadurch gekennzeichnet, dass** er in einem Coextrusionsprozess hergestellt ist.

10. Mehrschichtverbund nach einem der vorhergehenden Ansprüche, **dadurch gekennzeichnet, dass** das wenigstens eine andere Polyamid (B) der Aussenschicht (5) ausgewählt ist als Polyamid 612, Polyamid 616 oder eine Mischung davon, vorzugsweise nur aus Polyamid 612 besteht.

11. Mehrschichtverbund nach einem der vorhergehenden Ansprüche in Form einer Leitung, welche wenigstens abschnittsweise als Wellrohr ausgebildet sein kann, vorzugsweise als Kraftstoffleitung für Verbrennungsmotoren, insbesondere im Automobilbereich, wobei
die Leitung vorzugsweise ausschliesslich aus der Innenschicht (3), der Mittelschicht (4) und der Aussenschicht (5) besteht.

12. Mehrschichtverbund nach einem der vorhergehenden Ansprüche, **dadurch gekennzeichnet, dass** die innerste Schicht (8) auf Polyamid-Basis oder auf Basis eines thermoplastischen Fluorpolymers ausgebildet ist,
wobei die Polyamid-Basis vorzugsweise ausgewählt ist aus der Gruppe bestehend aus: PA 6, PA 12, PA 612, PA 10T/6T, PA 1212, PA 66, PA 11, PA 106, PA 1012, PA 10T/612, PA 10T/610, PA 9T, und/oder
das thermoplastische Fluorpolymer vorzugsweise basierend wenigstens auf Ethylen und Tetrafluoroethylen ausgebildet ist, mit oder ohne weitere Blöcke ausgewählt aus der Gruppe: Propylen-, insbesondere Hexafluoropropylen-Blöcke, Hexen, insbesondere Perfluorohexen-Blöcke, vorzugsweise als fluorhaltiges ethylenisches Polymer mit einer Carbonylgruppe, das insbesondere bevorzugt keine Amid-, Imid-, Urethan- oder Harnstoffgruppe enthält,
und/oder dass die innerste Schicht (8) aus folgenden Bestandteilen besteht:
(a) 75-100 Gewichtsprozent, vorzugsweise 85-98 Gewichtsprozent der genannten Polyamid-Basis oder Fluorpolymer basierend wenigstens auf Ethylen und Tetrafluoroethylen, mit oder ohne Hexafluoropropylen-Blöcke und /oder Perfluorohexen-Blöcke, vorzugsweise mit Carbonylgruppen;
(b) 0-25 Gewichtsprozent Additive verschieden von (c);
(c) 0.1-20 Gewichtsprozent Leitfähigkeitsadditiv;
wobei sich die Komponenten (a) und (c) auf 100 Gewichtsprozent des Materials der innersten Schicht (8) ergänzen.

13. Mehrschichtverbund nach Anspruch 12, **dadurch gekennzeichnet, dass** die Komponente (b) ausgewählt ist aus wenigstens einem Zuschlagstoff der folgenden Gruppe: Antioxidantien, Verarbeitungshilfsmittel, UV-Stabilisatoren, Wärmestabilisatoren, Pigmente, Masterbatchträger, Gleitmittel oder Mischungen davon,
und/oder dass die Komponente (c) wenigstens ein Additiv zur Erhöhung elektrischer Leitfähigkeit, vorzugsweise in Form von Partikeln aus Metallfasern, Metallpulver, Metalloxidpulver, leitfähigem Russ, leitfähiger Kohlefaser, leitfähigen Kohlenstoff-Nanoröhrchen, leitfähigem Graphitpulver, leitfähiger Graphitfaser, Graphen, Bronzepulver, Bronzefaser, Stahlpulver, Stahlfaser, Eisenpulver, Eisenfaser, Kupferpulver, Kupferfaser, Silberpulver, Silberfaser, Aluminiumpulver, Aluminiumfaser, Nickelpulver, Nickelfaser, Wolframpulver, Wolframfaser, Goldpulver, Goldfaser, Kupfer-Mangan-Legierungspulver, Kupfer-Manganfaser und Kombinationen davon enthält
und/oder die Komponente (b) wenigstens ein Leitfähigkeitsadditiv enthält, in einem Anteil im Bereich von 1-15 Gewichtsprozent, insbesondere in einem Anteil von 3-8 Gewichtsprozent, bezogen auf die Gesamtmasse der innersten Schicht.

14. Verfahren zur Herstellung eines Mehrschichtverbundes nach einem der vorhergehenden Ansprüche, **dadurch gekennzeichnet, dass** wenigstens 2, vorzugsweise alle 3 oder 4 Schichten, in einem kontinuierlichen und/oder diskontinuierlichen Prozess, bevorzugt in einem Extrusionsblasformen, einer Tandemextrusion, einem Ummantelungsverfahren oder einem Coextrusionsprozess, zu einem Hohlkörper, insbesondere bevorzugt zu einem Rohr respektive einer Leitung oder einem Behälter geformt werden.

15. Verwendung eines Mehrschichtverbundes nach einem der Ansprüche 1-13 als Leitung für Verbrennungsmotoren, insbesondere im Automobilbereich, insbesondere für Kraftstoff, Harnstoff oder Kühlmittel.

## Claims

1. Multilayer composite (1) in the form of a hollow body enclosing an inner space (2), consisting of three layers, an inner layer (3) adjoining the inner space (2), a middle layer (4) adjoining the inner layer and an outer layer (5) adjoining the middle layer (4) and bordering the multilayer composite (1) to the outside,
wherein the inner layer (3) is based on polyamide 6,
the middle layer (4) is formed on the basis of EVOH,
and the outer layer (5) is based on a mixture of
(A) polyamide 6 and
(B) at least one other polyamide selected from the following group: polyamide 612, polyamide 614, polyamide 616 and polyamide 618,
wherein the material of the outer layer is free from polyamide elastomers (TPE-A) or consisting of four layers, the said three layers (3-5) and a further innermost layer (8) directly adjacent to the said innermost layer (3), and being conductive.

2. Multilayer composite according to claim 1, **characterised in that** the outer layer (5) contains at least the following further constituents:
(C1) a plasticizer, in particular preferably selected as a hydroxybenzoic acid ester- or sulfonamide-based plasticizer, in particular BBSA, HDPB or a mixture thereof
(C2) at least one impact modifier, and
(C3) at least one adhesion promoter,
the proportion of plasticiser (C1) preferably being in the range of 3-12% by weight or in the range of 5-8% by weight,
and/or wherein the proportion of impact modifier (C2) is preferably in the range of 10-30% by weight, or in the range of 10-20% by weight,
and/or wherein the proportion of adhesion promoter (C3) is preferably in the range of 3-12% by weight or in the range of 5-10% by weight,
in each case based on the total mass of the material used to produce the outer layer as 100 percent by weight,
wherein preferably the outer layer (5) consists exclusively of the components (A), (B), (C1), (C2) and (C3) and optionally additives, in particular consisting of a copper stabilizer and a colour masterbatch wherein preferably the impact modifier (C2) is an ethylene/α-olefin copolymer, in particular ethylene/butylene or ethylene/propylene copolymer, or mixtures thereof, grafted with an anhydride, in particular with maleic anhydride,
and/or **in that** the adhesion promoter (C3) is a polyethylene grafted with an anhydride, in particular with maleic anhydride, in particular an LLDPE grafted in this way.

3. Multilayer composite according to any of the preceding claims, **characterized in that** the outer layer (5) consists of:
(A) 5-35 % by weight of polyamide 6;
(B) 30-60% by weight of at least one of said other polyamides selected from the following group: polyamide 612, polyamide 614, polyamide 616 and polyamide 618;
(C) 20 to 40 % by weight of other components different from (A) and (B);
wherein the sum of components (A)-(C) is 100% by weight of the material used to produce the outer layer,
preferably the other components (C) being composed as follows:
(C1) 3-8 weight percent plasticizer;
(C2) 9-30 weight percent impact modifier;
(C3) 3-10 weight percent adhesion promoter;
(C4) 0-3% by weight of additives, in particular processing aids, UV stabilizers, heat stabilizers, pigments, masterbatch carriers or mixtures thereof,
where the proportions of (C1)-(C4) are based on the 100 weight percent of the material for producing the outer layer formed by the sum of (A) - (C).

4. Multilayer composite according to one of the preceding claims, **characterized in that** at least one of the said other polyamides (B) of the outer layer (5), selected from the following group: polyamide 612, polyamide 614, polyamide 616 and polyamide 618, has a relative solution viscosity, measured in m-cresol according to ISO 307 (2007) at a temperature of 20°C, in the range 2.0-2.5, preferably 2.15-2.4, and/or **in that** at least one of the said other polyamides (B) of the outer layer (5), selected from the following group: polyamide 612, polyamide 614, polyamide 616 and polyamide 618, has a melting point in the range 180-240°C, preferably 185-225°C,
and/or **in that** the polyamide 6 (A) of the outer layer (5) has a relative solution viscosity measured in sulphuric acid according to ISO 307 (2007) at a temperature of 20°C in the range of 3.0 - 3.8, preferably 3.30-3.7,
and/or **in that** the polyamide 6 (A) of the outer layer (5) has a melting point in the range from 200 - 240 °C, preferably from 210-230 °C.

5. Multilayer composite according to one of the preceding claims, **characterized in that** the inner layer (3) has a copper stabilization, preferably based on CuI, in a proportion in the range of 0.01-0.10 weight percent, or in a proportion of 0.03-0.07 weight percent,
and/or **in that** the inner layer (3) contains an impact modifier, preferably in a proportion in the range of 10-25% by weight or in a range of 10-20% by weight, the impact modifier preferably being an ethylene/α-olefin copolymer grafted with an anhydride, in particular with maleic anhydride, in particular ethylene/butylene or ethylene/propylene copolymer grafted in this way, and mixtures thereof
and wherein the weight percentages are each based on 100 weight percent of the material for producing the inner layer (3).

6. Multilayer composite according to any of the preceding claims, **characterized in that** the inner layer (3) consists of:
| | |
|---|---|
| (A_I) | Polyamide 6, preferably having a relative solution viscosity measured in sulphuric acid according to ISO 307 (2007) at a temperature of 20 °C in the range 3.5-3.8, preferably 3.6-3.75; |
| (B_I) | 10-30 weight percent impact modifier |
| (C_I) | 0.01-0.1 weight percent heat stabilizer, preferably based on copper(I) |
| (D_I) | 0-15 % by weight, preferably 5 - 10 or 0 - 1 weight percent additives, preferably selected from the group: conductivity additives, crystallization accelerators, processing aids, lubricants, and mixtures thereof |
where the sum of the components (A_I) - (D_I) add up to 100% by weight of the material used to produce the inner layer (3).

7. Multilayer composite according to any of the preceding claims, **characterized in that** the middle layer (4) consists of an EVOH, preferably an EVOH with an ethylene content in the range of 20-25 percent by weight, preferably in the range of 25-30 percent by weight.

8. Multilayer composite according to any of the preceding claims, **characterized in that**
the inner layer (3) has a thickness in the range 0.3-0.6 mm, preferably in the range 0.4-0.5 mm,
and/or that the middle layer (4) has a thickness in the range of 0.05-0.2 mm, preferably in the range of 0.075-0.125 mm,
and/or that the outer layer (5) has a thickness in the range of 0.3-0.6 mm, preferably in the range of 0.4-0.5 mm,
and/or that, if present, the innermost layer (8) has a thickness in the range of 0.08 - 1 mm, preferably in the range of 0.1 - 0.9 mm,
whereby preferably the total wall thickness of the multilayer composite is in the range of 0.5-2.5 mm, preferably in the range of 0.75-1.5 mm.

9. Multilayer composite according to any of the preceding claims, **characterised in that** it is produced in a co-extrusion process.

10. Multilayer composite according to one of the preceding claims, **characterized in that** the at least one polyamide (A) of the outer layer (5) is selected from polyamide 612, polyamide 616 or a mixture thereof, preferably consisting only of polyamide 612.

11. Multilayer composite according to one of the preceding claims in the form of a pipe which can be structured at least in sections as a corrugated pipe, preferably as a fuel pipe for internal combustion engines, in particular in the automotive sector, wherein preferably the pipe consists exclusively of the inner layer (3), the middle layer (4) and the outer layer (5).

12. Multilayer composite according to one of the preceding claims, **characterized in that** the innermost layer (8) is based on polyamide or on a thermoplastic fluoropolymer,
wherein the polyamide base is preferably selected from the group consisting of PA 6, PA 12, PA 612, PA 10T/6T, PA 1212, PA 66, PA 11, PA 106, PA 1012, PA 10T/612, PA 10T/610, PA 9T, and/or
the thermoplastic fluoropolymer is preferably based at least on ethylene and tetrafluoroethylene, with or without further blocks selected from the group: propylene blocks, in particular hexafluoropropylene blocks, hexene blocks, in particular perfluorohexene blocks, preferably as a fluorine-containing ethylenic polymer with a carbonyl group, which in particular preferably does not contain any amide, imide, urethane or urea group,
and/or that the innermost layer (8) consists of the following components:
(a) 75-100% by weight, preferably 85-98% by weight of said polyamide base or fluoropolymer based on at least ethylene and tetrafluoroethylene, with or without hexafluoropropylene blocks and/or perfluorohexene blocks, preferably with carbonyl groups;
(b) 0-25 % by weight of additives other than (c);
(c) 0.1-20 weight percent conductivity additive;
wherein the components (a) and (c) to 100 weight percent of the material of the innermost layer (8).

13. Multilayer composite according to claim 12, **characterized in that** component (b) is selected from at least one additive from the following group: antioxidants, processing aids, UV stabilizers, heat stabilizers, pigments, masterbatch carriers, lubricants or mixtures thereof,
and/or that component (c) contains at least one additive for increasing electrical conductivity, preferably in the form of particles of metal fibres, metal powder, metal oxide powder, conductive carbon black, conductive carbon fibre, conductive carbon nanotubes, conductive graphite powder, conductive graphite fibre, graphene, bronze powder, bronze fibre, steel powder, steel fibre, iron powder, iron fibre, copper powder, copper fibre, silver powder, silver fibre, aluminium powder, aluminium fibre, nickel powder, nickel fibre, tungsten powder, tungsten fibre, gold powder, gold fibre, copper-manganese alloy powder, copper-manganese fibre and combinations,
and/or **in that** component (b) contains at least one conductivity additive, in a proportion in the range of 1-15% by weight, in particular in a proportion of 3-8% by weight, based on the total mass of the innermost layer.

14. Method for producing a multilayer composite according to one of the preceding claims, **characterised in that** at least 2, preferably all 3 or 4 layers, are formed into a hollow body, in particular preferably into a pipe or a tube or a container, in a continuous and/or discontinuous process, preferably in an extrusion blow moulding, tandem extrusion, sheathing or coextrusion process.

15. Use of a multilayer composite according to one of claims 1-13 as a tube for internal combustion engines, especially in the automotive sector, especially for fuel, urea or coolant

## Revendications

1. Composite multicouche (1) sous la forme d'un corps creux renfermant un espace intérieur (2), constitué de trois couches, une couche intérieure (3) attenante à l'espace intérieur (2), une couche médiane (4) attenante à la couche intérieure et une couche extérieure (5) attenante à la couche médiane (4) et bordant le composite multicouche (1) à l'extérieur,
dans lequel la couche intérieure (3) est à base de polyamide 6,
la couche intermédiaire (4) est formée à base d'EVOH,
et la couche extérieure (5) est à base d'un mélange de
(A) polyamide 6 et
(B) au moins un autre polyamide choisi dans le groupe suivant : polyamide 612, polyamide 614, polyamide 616 et polyamide 618,
dans lequel le matériau de la couche extérieure est exempt d'élastomères polyamides (TPE-A)
ou constituée de quatre couches, lesdites trois couches (3-5) et une autre couche intérieure (8) directement adjacente à ladite couche intérieure (3), et conductrice.

2. Composite multicouche selon la revendication 1, **caractérisé par le fait que** la couche extérieure (5) contient au moins les autres constituants suivants :
(C1) un plastifiant, choisi de préférence comme plastifiant à base d'ester d'acide hydroxybenzoïque ou de sulfamide, en particulier BBSA, HDPB ou un mélange de ceux-ci
(C2) au moins un modificateur d'impact, et
(C3) au moins un promoteur d'adhésion,
la proportion de plastifiant (C1) est de préférence comprise entre 3 et 12 % en poids ou entre 5 et 8 % en poids,
et/ou dans lequel la proportion de modificateur d'impact (C2) est de préférence comprise entre 10 et 30 % en poids, ou entre 10 et 20 % en poids,
et/ou dans lequel la proportion de promoteur d'adhésion (C3) est de préférence comprise entre 3 et 12 % en poids ou entre 5 et 10 % en poids,
dans chaque cas, sur la base de la masse totale du matériau utilisé pour produire la couche extérieure à 100 % en poids,
dans laquelle, de préférence, la couche extérieure (5) est constituée exclusivement des composants (A), (B), (C1), (C2) et (C3) et éventuellement d'additifs, en particulier d'un stabilisateur au cuivre et d'un mélange maître de couleurs dans laquelle, de préférence, le modificateur d'impact (C2) est un copolymère d'éthylène/α-oléfine, en particulier un copolymère d'éthylène/butylène ou d'éthylène/propylène, ou des mélanges de ceux-ci, greffé avec un anhydride, en particulier avec l'anhydride maléique,
et/ou en ce que le promoteur d'adhésion (C3) est un polyéthylène greffé avec un anhydride, notamment avec l'anhydride maléique, en particulier un LLDPE ainsi greffé.

3. Composite multicouche selon l'une quelconque des revendications précédentes, **caractérisé par le fait que** la couche extérieure (5) est constituée de :
(A) 5-35 % en poids de polyamide 6 ;
(B) 30-60% en poids d'au moins un desdits autres polyamides choisis dans le groupe suivant : polyamide 612, polyamide 614, polyamide 616 et polyamide 618 ;
(C) 20 à 40 % en poids d'autres composants différents de (A) et (B) ;
dans lequel la somme des composants (A)-(C) représente 100 % en poids du matériau utilisé pour produire la couche extérieure,
de préférence, les autres composants (C) sont composés comme suit :
(C1) 3-8 pour cent en poids de plastifiant ;
(C2) 9-30 modificateur d'impact en pourcentage du poids ;
(C3) 3 à 10 % en poids de promoteur d'adhérence ;
(C4) 0-3% en poids d'additifs, en particulier d'auxiliaires technologiques, de stabilisateurs UV, de stabilisateurs thermiques, de pigments, de supports de mélanges-maîtres ou de leurs mélanges,
où les proportions de (C1)-(C4) sont basées sur le pourcentage en poids du matériau pour la production de la couche extérieure formée par la somme de (A) - (C).

4. Composite multicouche selon l'une des revendications précédentes, **caractérisé en ce qu'**au moins l'un desdits autres polyamides (B) de la couche externe (5), choisi dans le groupe suivant : polyamide 612, polyamide 614, polyamide 616 et polyamide 618, présente une viscosité relative en solution, mesurée en m-crésol selon la norme ISO 307 (2007) à une température de 20°C, comprise entre 2,0 et 2,5, de préférence entre 2,15 et 2,4,
et/ou **en ce qu'**au moins un desdits autres polyamides (B) de la couche extérieure (5), choisi dans le groupe suivant : polyamide 612, polyamide 614, polyamide 616 et polyamide 618, a un point de fusion compris entre 180 et 240°C, de préférence entre 185 et 225°C,
et/ou **en ce que** le polyamide 6 (A) de la couche extérieure (5) a une viscosité relative en solution mesurée dans l'acide sulfurique selon la norme ISO 307 (2007) à une température de 20 °C dans la plage de 3,0 à 3,8, de préférence de 3,30 à 3,7, et/ou **en ce que** le polyamide 6 (A) de la couche extérieure (5) a un point de fusion compris entre 200 et 240 °C, de préférence entre 210 et 230 °C.

5. Composite multicouche selon l'une des revendications précédentes, **caractérisé par le fait que** la couche interne (3) présente une stabilisation au cuivre, de préférence à base de CuI, dans une proportion comprise entre 0,01 et 0,10 % en poids, ou dans une proportion comprise entre 0,03 et 0,07 % en poids,
et/ou en ce que la couche intérieure (3) contient un modificateur d'impact, de préférence dans une proportion comprise entre 10 et 25 % en poids ou entre 10 et 20 % en poids, le modificateur d'impact étant de préférence un copolymère éthylène/α-oléfine greffé avec un anhydride, en particulier avec l'anhydride maléique, en particulier un copolymère éthylène/butylène ou éthylène/propylène ainsi greffé, et leurs mélanges
et dans lequel les pourcentages de poids sont chacun basés sur 100 pour cent de poids du matériau pour la production de la couche intérieure (3).

6. Composite multicouche selon l'une quelconque des revendications précédentes, **caractérisé par le fait que** la couche intérieure (3) est constituée de :
| | |
|---|---|
| (A_I) | Polyamide 6, ayant de préférence une viscosité relative en solution mesurée dans l'acide sulfurique conformément à la norme ISO 307 (2007) à une température de 20 °C, comprise entre 3,5 et 3,8, de préférence entre 3,6 et 3,75 ; |
| (B_I) | modificateur d'impact de 10 à 30 % du poids |
| | |
|---|---|
| (C_I) | 0,01-0,1 % en poids de stabilisant thermique, de préférence à base de cuivre(I) |
| (D_I) | 0-15 % en poids, de préférence 5-10 ou 0-1 % en poids d'additifs, de préférence choisis dans le groupe : additifs de conductivité, accélérateurs de cristallisation, auxiliaires technologiques, lubrifiants, et leurs mélanges |
où la somme des composants (A_I) - (D_I) s'élève à 100 % en poids du matériau utilisé pour produire la couche intérieure (3).

7. Composite multicouche selon l'une quelconque des revendications précédentes, **caractérisé par le fait que** la couche centrale (4) est constituée d'un EVOH, de préférence d'un EVOH dont la teneur en éthylène est comprise entre 20 et 25 % en poids, de préférence entre 25 et 30 % en poids.

8. Composite multicouche selon l'une quelconque des revendications précédentes, **caractérisé par le fait que**
la couche intérieure (3) a une épaisseur comprise entre 0,3 et 0,6 mm, de préférence entre 0,4 et 0,5 mm,
et/ou que la couche intermédiaire (4) a une épaisseur comprise entre 0,05 et 0,2 mm, de préférence entre 0,075 et 0,125 mm,
et/ou que la couche extérieure (5) a une épaisseur comprise entre 0,3 et 0,6 mm, de préférence entre 0,4 et 0,5 mm,
et/ou que, si elle est présente, la couche la plus interne (8) a une épaisseur comprise entre 0,08 et 1 mm, de préférence entre 0,1 et 0,9 mm,
De préférence, l'épaisseur totale de la paroi du composite multicouche est comprise entre 0,5 et 2,5 mm, de préférence entre 0,75 et 1,5 mm.

9. Composite multicouche selon l'une quelconque des revendications précédentes, **caractérisé par le fait qu'**il est produit par un procédé de co-extrusion.

10. Composite multicouche selon l'une des revendications précédentes, **caractérisé en ce que** le au moins un polyamide (A) de la couche externe (5) est choisi parmi le polyamide 612, le polyamide 616 ou un mélange de ceux-ci, de préférence constitué uniquement de polyamide 612.

11. Composite multicouche selon l'une des revendications précédentes sous la forme d'un tuyau qui peut être structuré au moins en sections comme un tuyau ondulé, de préférence comme un tuyau de carburant pour les moteurs à combustion interne, en particulier dans le secteur automobile, dans lequel de préférence le tuyau est constitué exclusivement de la couche intérieure (3), de la couche intermédiaire (4) et de la couche extérieure (5).

12. Composite multicouche selon l'une des revendications précédentes, **caractérisé par le fait que** la couche la plus interne (8) est à base de polyamide ou de fluoropolymère thermoplastique
dans lequel la base polyamide est de préférence choisie dans le groupe constitué par PA 6, PA 12, PA 612, PA 10T/6T, PA 1212, PA 66, PA 11, PA 106, PA 1012, PA 10T/612, PA 10T/610, PA 9T
le fluoropolymère thermoplastique est de préférence basé au moins sur l'éthylène et le tétrafluoroéthylène, avec ou sans autres blocs choisis dans le groupe : blocs propylène, en particulier blocs hexafluoropropylène, blocs hexène, en particulier blocs perfluorohexène, de préférence en tant que polymère éthylénique contenant du fluor avec un groupe carbonyle, qui en particulier ne contient de préférence aucun groupe amide, imide, uréthane ou urée,
et/ou que la couche la plus interne (8) est constituée des éléments suivants :
(a) 75-100% en poids, de préférence 85-98% en poids de ladite base polyamide ou fluoropolymère à base d'au moins éthylène et tétrafluoroéthylène, avec ou sans blocs hexafluoropropylène et/ou blocs perfluorohexène, de préférence avec des groupes carbonyles ;
(b) 0-25 % en poids d'additifs autres que c) ;
(c) Additif de conductivité de 0,1 à 20 % en poids ;
dans lequel les composants (a) et (c) représentent 100 % en poids du matériau de la couche la plus interne (8).

13. Composite multicouche selon la revendication 12, **caractérisé par le fait que** le composant (b) est choisi parmi au moins un additif du groupe suivant : antioxydants,
auxiliaires de fabrication, stabilisateurs UV, stabilisateurs thermiques, pigments, supports de mélanges-maîtres, lubrifiants ou leurs mélanges,
et/ou que le composant (c) contient au moins un additif destiné à augmenter la conductivité électrique, de préférence sous forme de particules de fibres métalliques, de poudre métallique, de poudre d'oxyde métallique, de noir de carbone conducteur, de fibre de carbone conductrice, de nanotubes de carbone conducteurs, de poudre de graphite conducteur, de fibre de graphite conductrice, de graphène, poudre de bronze, fibre de bronze, poudre d'acier, fibre d'acier, poudre de fer, fibre de fer, poudre de cuivre, fibre de cuivre, poudre d'argent, fibre d'argent, poudre d'aluminium, fibre d'aluminium, poudre de nickel, fibre de nickel, poudre de tungstène, fibre de tungstène, poudre d'or , fibre d'or, poudre d'alliage cuivre-manganèse, fibre de cuivre-manganèse et combinaisons
et/ou le composant (b) contient au moins un additif de conductivité, dans une proportion comprise entre 1 et 15 % en poids, en particulier dans une proportion de 3 à 8 % en poids, par rapport à la masse totale de la couche la plus interne.

14. Procédé de fabrication d'un composite multicouche selon l'une des revendications précédentes, **caractérisé par le fait qu'**au moins 2, de préférence les 3 ou 4 couches, sont formées en un corps creux, en particulier de préférence en un tuyau ou un tube ou un récipient, dans un processus continu et/ou discontinu, de préférence dans un processus d'extrusion-soufflage, d'extrusion tandem, de gainage ou de coextrusion.

15. Utilisation d'un composite multicouche selon l'une des revendications 1 à 13 comme tube pour moteur à combustion interne, notamment dans le secteur automobile, en particulier pour le carburant, l'urée ou le liquide de refroidissement.
